# FASCICULE DE BREVET EUROPEEN

(11) **EP 3 666 507 B1**
(45) Date de publication et mention de la délivrance du brevet: **20.04.2022**
(21) Numéro de dépôt: 19213395.7
(22) Date de dépôt: 04.12.2019
(51) Int. Cl.: B29C 70/54, B29D 99/00, B64C 1/06, B29C 65/00

(54) **PROCÉDÉ DE FABRICATION D'UN CAISSON CENTRAL DE VOILURE D AÉRONEF COMPORTANT AU MOINS UN RAIDISSEUR PRÉSENTANT AU MOINS UN TROU TRAVERSANT**
VERFAHREN ZUR HERSTELLUNG EINES FLÜGELMITTELKASTENS EINES FLUGZEUGS MIT MINDENSTENS EINEM VERSTEIFER MIT MINDENSTENS EINER DURCHGANGSBOHRUNG
METHOD FOR MANUFACTURING A WINGBOX OF AN AIRCRAFT COMPRISING AT LEAST ONE STIFFENER WITH AT LEAST ONE THROUGH HOLE

(30) Priorité: 11.12.2018 FR 1872706
(43) Date de publication de la demande: 17.06.2020
(73) Titulaire: Airbus Operations SAS, 31060 Toulouse (FR)
(72) Inventeur: PENVEN, Benoît, 31330 GRENADE SUR GARONNE (FR); VIVIEN, Guillaume, 44830 BRAINS (FR); FORDOS, Nicolas, 44400 REZE (FR); PRIDIE, Jago, 44000 NANTES (FR)
(74) Mandataire: Fantin, Laurent

(56) Documents cités:
- EP-A1- 3 208 187
- FR-A1- 3 030 443

## Description

La présente demande se rapporte à un procédé de fabrication d'un caisson central de voilure d'aéronef comportant au moins un raidisseur présentant au moins un trou traversant.

Un aéronef comprend un caisson central de voilure pour relier les ailes au fuselage. Ce caisson central de voilure comprend un panneau supérieur, un panneau inférieur, un longeron avant et un longeron arrière. Chaque panneau ou longeron est renforcé et comprend, au niveau de sa face interne (orientée vers le centre du caisson central de voilure), des raidisseurs.

Selon un mode de réalisation décrit dans le document EP-2.590.856, le caisson central de voilure est réalisé en matériau composite en déposant des renforts fibreux autour d'un moule présentant quatre faces et une section identique à celle du caisson central de voilure. Pour obtenir les raidisseurs, des profilés en matériau composite, présentant une section en U au niveau de chaque face du moule et une section en C au niveau de chaque arête du moule, sont disposés tout autour du moule avant la dépose des renforts fibreux autour du moule. Chaque profilé en U comprend une semelle et deux branches approximativement perpendiculaires à la semelle. Chaque profilé en C comprend une partie centrale en L et deux branches de part et d'autre de la partie centrale en L.

Les profilés en U et en C sont juxtaposés de sorte que les branches de deux profilés adjacents soient accolées l'une contre l'autre pour former un raidisseur et que les semelles et les parties centrales en L des profilés soient plaquées contre le moule. Le moule comprend, sur sa circonférence, une pluralité de rainures configurées pour loger chacune deux branches accolées de deux profilés juxtaposés en U ou en C.

En suivant, des renforts fibreux sont déposés, par enroulement par exemple, sur les semelles et les parties centrales en L des profilés en U et en C.

A l'issue de la mise en place des renforts fibreux, l'ensemble constitué par les profilés et les renforts fibreux est polymérisé.

Après la polymérisation, des trous de drainage doivent être réalisés au niveau des raidisseurs du panneau inférieur. Selon un mode de réalisation, chacun de ces trous de drainage est réalisé par perçage, à l'aide d'un foret par exemple, puis les trous de drainage ainsi percés sont peints. Compte tenu de leur nombre, la réalisation de ces trous est longue et fastidieuse. Cette opération est d'autant plus complexe qu'elle doit être réalisée à l'intérieur du caisson.

Le document FR-3.030.443 propose un procédé de réalisation d'un caisson central de voilure qui présente un longeron intermédiaire. Ce caisson central de voilure est obtenu à partir de deux caissons élémentaires qui peuvent comprendre des raidisseurs et qui peuvent être réalisés chacun à partir du procédé décrit dans le document EP-2.590.856. Les parois accolées des caissons élémentaires peuvent comprendre des trous pour former, une fois les caissons élémentaires assemblés, un trou d'homme. Ce document FR-3.030.443 ne décrit aucun trou au niveau des raidisseurs.

La présente invention vise à remédier à tout ou partie des inconvénients de l'art antérieur.

A cet effet, l'invention a pour objet un procédé de fabrication d'un caisson central de voilure d'un aéronef comprenant des raidisseurs, au moins un desdits raidisseurs présentant au moins un trou traversant, ledit caisson central de voilure étant réalisé à partir d'une pluralité de profilés en U et en C et d'une peau externe, les profilés en U ou en C présentant chacun une partie centrale et deux branches de part et d'autre de la partie centrale, le procédé de fabrication comprenant les étapes suivantes :
- de dépose des profilés en U et en C juxtaposés tout autour d'un moule de sorte que des première et deuxième branches de deux profilés en U ou en C adjacents soient accolées l'une contre l'autre pour former un raidisseur,
- de dépose de la peau externe sur les parties centrales des profilés en U et en C,
- de polymérisation, et
- de démoulage.

Selon l'invention, le procédé de fabrication du caisson central de voilure se caractérise en ce que, pour chaque raidisseur présentant au moins un trou traversant et comprenant une première branche d'un premier profilé en U et en C et une deuxième branche d'un deuxième profilé en U et en C, le procédé comprend, pour chaque trou traversant, les étapes de réalisation d'un premier tronçon du trou traversant dans le premier profilé en U ou en C et de réalisation d'un deuxième tronçon du trou traversant dans le deuxième profilé en U et en C avant que les premier et deuxième profilés en U ou en C ne soient positionnés sur le moule.

Ainsi, selon l'invention, les trous travsersants ne sont pas réalisés depuis l'intérieur du caisson central de voilure. La réalisation des trous traversants est plus aisée pour les opérateurs car ils sont obtenus chacun en réalisant des premier et deuxième tronçons indépendamment les uns des autres alors que les profilés en U ou en C ne sont pas encore assemblés.

Selon une autre caractéristique de l'invention, les premier et deuxième tronçons de chaque trou traversant sont réalisés avant que les profilés en U ou en C ne soient totalement polymérisés.

Selon une autre caractéristique de l'invention, chaque premier ou deuxième tronçon de chaque trou traversant est comblé à l'aide d'un bouchon temporaire avant que les profilés en U ou en C ne soient positionnés sur le moule, chaque bouchon temporaire étant retiré après l'étape de polymérisation du caisson central de voilure.

Selon une autre caractéristique de l'invention, chaque bouchon temporaire présente une hauteur sensiblement égale à une épaisseur de la première ou deuxième branche dans laquelle est prévu le premier ou deuxième tronçon comblé par le bouchon temporaire. Selon une autre caractéristique de l'invention, chaque bouchon temporaire a un diamètre égal ou très légèrement inférieur à celui du premier ou deuxième tronçon qu'il comble avant l'étape de polymérisation.

Selon une autre caractéristique de l'invention, chaque bouchon temporaire présente un diamètre égal ou très légèrement supérieur à celui du premier ou deuxième tronçon qu'il comble avant l'étape de polymérisation et il est réalisé en un matériau légèrement compressible de manière à pouvoir être inséré dans le premier ou deuxième tronçon à l'état légèrement comprimé.

Selon un mode de réalisation, chaque bouchon temporaire est réalisé en élastomère de silicone.

Selon une autre caractéristique, chaque bouchon temporaire a une forme cylindrique. D'autres caractéristiques et avantages ressortiront de la description de l'invention qui va suivre, description donnée à titre d'exemple uniquement, en regard des dessins annexés parmi lesquels :
- La figure 1 est une partie d'un fuselage d'un aéronef qui comprend un caisson central de voilure,
- La figure 2 est une vue en perspective d'un caisson central de voilure,
- La figure 3 est une vue en perspective d'un profilé en U qui illustre un mode de réalisation de l'invention,
- La figure 4 est une vue en perspective d'un profilé en C qui illustre un mode de réalisation de l'invention,
- La figure 5 est une coupe de deux profilés juxtaposés équipés de bouchons qui illustre un mode de réalisation de l'invention,
- La figure 6 est une coupe d'un moule supportant des profilés en U et en C dont certains comprennent des trous traversants obturés par des bouchons qui illustre un mode de réalisation de l'invention, et
- La figure 7 est une coupe d'une partie d'un caisson central de voilure comprenant des raidisseurs qui présentent des trous traversants qui illustre un mode de réalisation de l'invention.

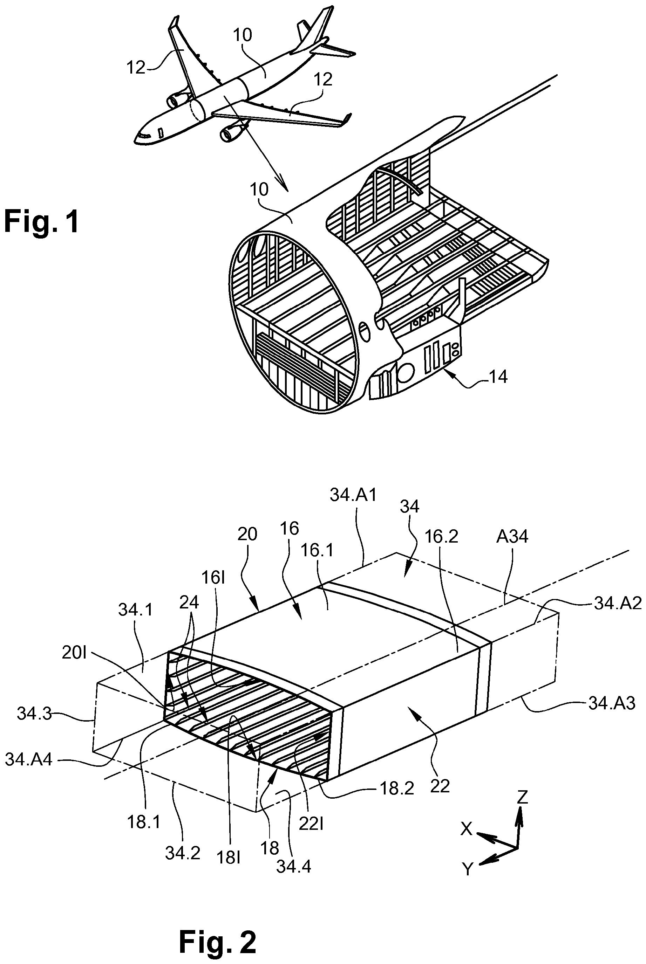

Comme illustré sur la figure 1, la structure d'un aéronef comprend un fuselage 10 et une voilure 12 reliés par l'intermédiaire d'un caisson central de voilure 14. Selon un mode de réalisation illustré sur la figure 2, le caisson central de voilure 14 comprend un panneau supérieur 16, un panneau inférieur 18, un longeron avant 20 et un longeron arrière 22.

Le panneau supérieur 16 présente un bord avant 16.1 et un bord arrière 16.2 sensiblement parallèles entre eux. Le panneau inférieur 18 présente un bord avant 18.1 et un bord arrière 18.2 sensiblement parallèles entre eux. Les bords avants 16.1 et 18.1 des panneaux supérieur et inférieur 16, 18 sont reliés par le longeron avant 20 et les bords arrières 16.2 et 18.2 des panneaux supérieur et inférieur 16, 18 sont reliés par le longeron arrière 22.

Les longerons avant et arrière 20, 22 sont sensiblement plans et parallèles et sont perpendiculaires à une direction longitudinale X. Les bords avants et arrières 16.1, 18.1, 16.2, 18.2 des panneaux supérieur et inférieur 16, 18 sont parallèle à une direction transversale horizontale Y. La direction horizontale verticale Z est perpendiculaire aux directions X et Y.

Les panneaux supérieur et inférieur 16, 18 ainsi que les longerons avant et arrière 20, 22 présentent chacun une face interne (orientée vers le centre du caisson central voilure) référencée respectivement 16I, 18I, 20I et 22I.

Les faces internes 16I, 18I, 20I et 22I des panneaux supérieur et inférieur 16, 18 et des longerons avant et arrière 20, 22 comprennent des raidisseurs 24 parallèles à la direction transversale horizontale Y et positionnés à l'intérieur du caisson central de voilure 14.

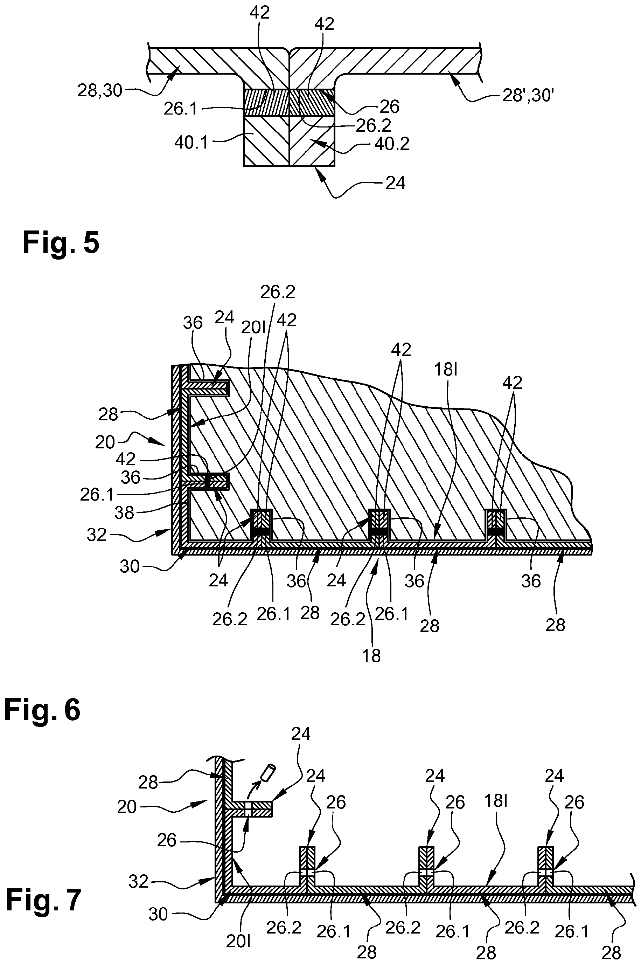

Au moins un des raidisseurs 24 comprend au moins un trou traversant 26, comme illustré sur la figure 7. Selon une configuration, tous les raidisseurs 24 prévus au niveau de la face intérieure 18I du panneau inférieur 18 comprennent un ou plusieurs trou(s) traversant(s) 26. Bien entendu, l'invention n'est pas limitée à cette configuration. Ainsi, au moins certains des raidisseurs 24 prévus sur les faces intérieures 16I, 20I, 22I du panneau supérieur 16 et des longerons avant et arrière 20, 22 peuvent comprendre un ou plusieurs trou(s) traversant(s) 26.

Selon l'invention, le caisson central de voilure 14 est en matériau composite.

Comme illustré sur la figure 6, le caisson central de voilure 14 est obtenu à partir d'une pluralité de profilés en U ou en C 28, 30, en matériau composite, sur lesquels une peau externe 32 est formée à partir de renforts fibreux. La pluralité de profilés en U ou en C 28, 30, en matériau composite, sont positionnés autour d'un moule 34 (visible sur la figure 2 en trait mixte et en partie sur la figure 6).

Par renfort fibreux, on entend au moins une fibre, un ensemble de fibres, une ou plusieurs mini-nappes de fibres ou une ou plusieurs nappes.

Le moule 34 comprend quatre faces 34.1 à 34.4 reliées, deux à deux, au niveau de quatre arêtes 34.A1 à 34.A4 et agencées de la même manière que les faces internes 16I, 18I, 20I et 22I des panneaux supérieur et inférieur 16, 18 et des longerons avant et arrière 20, 22 du caisson central de voilure 14. Selon une configuration, le moule 34 présente un axe de pivotement A34, parallèle aux arêtes 34.A1 à 34.A4 et à la direction transversale horizontale Y, pour permettre l'enroulement des renforts fibreux.

Le moule 34 comprend des rainures 36, parallèles aux arêtes 34.A1 à 34.A4, ménagées au niveau des faces 34.1 à 34.4 du moule 34, une rainure 36 pour chaque raidisseur 24.

Le caisson central de voilure 14 est obtenu à partir de profilés en U 28 positionnés parallèlement à l'axe de pivotement A34 au niveau des faces 34.1 à 34.4 du moule 34 et de profilés en C 30 positionnés parallèlement à l'axe de pivotement A34 au niveau de chacune des arêtes 34.A1 à 34.A4 du moule 34.

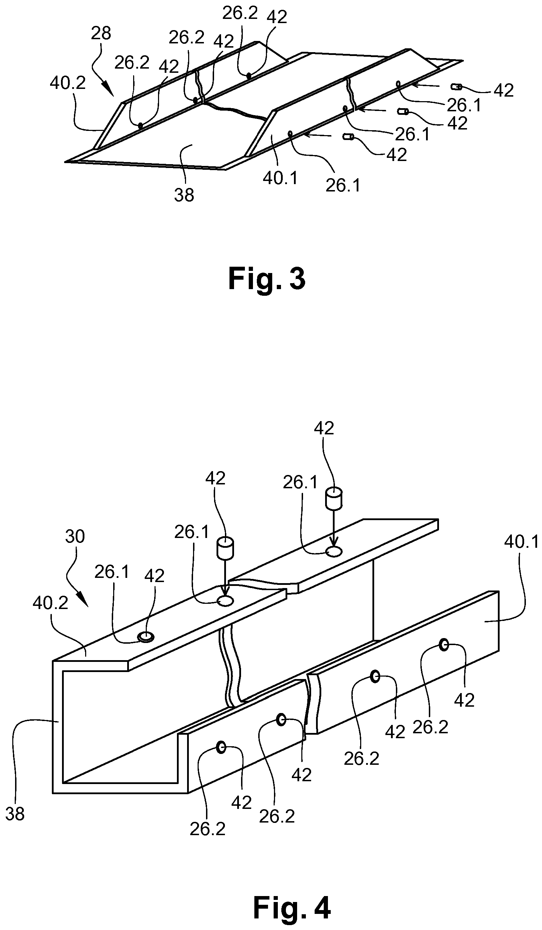

Comme illustré sur la figure 3, chaque profilé en U 28 comprend une partie centrale 38, également appelée semelle, des première et deuxième branches 40.1 et 40.2 approximativement perpendiculaires à la partie centrale 38.

Comme illustré sur la figure 4, chaque profilé en C 30 comprend une partie centrale 38 en L, des première et deuxième branches 40.1, 40.2 de part et d'autre de la partie centrale 38. Pour donner un ordre de grandeur, chaque profilé a une épaisseur de l'ordre de 4 à 6 mm et les branches des profilés 28, 30 ont une hauteur de l'ordre de 45 mm.

Comme illustré sur la figure 5, chaque raidisseur 24 comprend une première branche 40.1 d'un premier profilé en U ou en C 28, 30 et une deuxième branche 40.2 d'un deuxième profilé en U ou en C 28', 30' accolées l'une contre l'autre. Pour chaque trou traversant 26 du raidisseur 24, la première branche 40.1 comprend un premier tronçon 26.1 du trou traversant 26 et la deuxième branche 40.2 comprend un deuxième tronçon 26.2 du trou traversant 26, les premier et deuxième tronçons 26.1, 26.2 du trou traversant 26 étant approximativement alignés lorsque les première et deuxième branches 40.1, 40.2 sont accolées pour former le raidisseur 24.

Le procédé de fabrication du caisson central de voilure 14 comprend, pour chaque trou traversant 26, les étapes de réalisation d'un premier tronçon 26.1 du trou traversant 26 dans le premier profilé en U ou en C 28, 30 et de réalisation d'un deuxième tronçon 26.2 du trou traversant 26 dans le deuxième profilé en U ou en C 28', 30' avant que les premier et deuxième profilés en U ou en C ne soient positionnés sur le moule 34. Les premier et deuxième tronçons 26.1, 26.2 sont réalisés indépendamment l'un de l'autre, lorsque les premier et deuxième profilés 28, 28', 30, 30' ne sont pas encore juxtaposés. Ces premier et deuxième tronçons 26.1, 26.2 sont positionnés sur chacun des premier et deuxième profilés 28, 28', 30, 30' de manière à être alignés lorsque les premier et deuxième profilés 28, 28', 30, 30' sont juxtaposés pour former le raidisseur 24.

Selon un mode de réalisation, les premier et deuxième tronçons 26.1, 26.2 de chaque trou traversant 26 sont obtenus par perçage, en utilisant par exemple un foret.

Selon un mode opératoire, les premier et deuxième tronçons 26.1, 26.2 de chaque trou traversant 26 sont réalisés avant que les profilés en U ou en C 28, 28', 30, 30' ne soient totalement polymérisés, notamment lorsqu'ils sont crus ou partiellement polymérisés.

Selon un mode de réalisation, chaque profilé en U ou en C 28, 30 est une préforme de fibres pré-imprégnées réalisée par tout moyen approprié, dans laquelle sont réalisés les premiers et deuxièmes tronçons 26.1, 26.2 de chaque trou traversant 26.

Selon une première variante, chaque premier ou deuxième tronçon 26.1, 26.2 de chaque trou traversant 26 est comblé à l'aide d'un bouchon temporaire 42 avant que les profilés en U ou en C 28, 30 ne soient positionnés sur le moule 34 et qu'ils ne soient totalement polymérisés, comme illustré sur les figures 3 et 4.

Selon une deuxième variante, les premier et deuxième tronçons 26.1, 26.2 de chaque trou traversant 26 sont comblés à l'aide d'un bouchon temporaire 42, après que les profilés en U ou en C 28, 30 soient accolés de manière à former les raidisseurs mais avant qu'ils ne soient totalement polymérisés. Selon cette deuxième variante, le bouchon temporaire 42 s'étend sur toute la longueur des premier et deuxième tronçons 26.1, 26.2 de chaque trou traversant 26. Cette deuxième variante permet de réduire le nombre de bouchons temporaires 42.

Chaque bouchon temporaire 42 a une forme cylindrique ou conique et présente une section circulaire, ovale, elliptique ou prismatique. Selon la première variante, chaque bouchon temporaire 42 présente une hauteur H sensiblement égale à l'épaisseur E de la première ou deuxième branche dans laquelle est prévu le premier ou deuxième tronçon 26.1, 26.2 comblé par le bouchon temporaire 42. Selon la deuxième variante, chaque bouchon temporaire 42 présente une hauteur égale à la longueur du trou traversant 26 qu'il comble. Selon une première configuration, chaque bouchon temporaire 42 a un diamètre égal ou très légèrement inférieur à celui du premier ou deuxième tronçon 26.1, 26.2 qu'il comble avant l'étape de polymérisation. L'écart entre le bouchon temporaire 42 et le premier ou deuxième tronçon 26.1, 26.2 est comblé après l'étape de polymérisation en raison d'un phénomène d'expansion du matériau composite.

Selon une autre configuration, le bouchon temporaire 42 a un diamètre égal ou très légèrement supérieur à celui des premier et/ou deuxième tronçons 26.1, 26.2 qu'il comble. Selon cette autre configuration, il est réalisé en un matériau légèrement compressible de manière à pouvoir être inséré dans les premier et/ou deuxième tronçons 26.1, 26.2 à l'état légèrement comprimé. Cette configuration permet d'éviter que les bouchons temporaire 42 ne sortent des premiers et deuxièmes tronçons 26.1, 26.2 lors de la manipulation des profilés en U ou en C 28, 30.

Selon un mode de réalisation, chaque bouchon temporaire 42 est en un matériau compatible avec les fibres pré-imprégnées des profilés en U ou en C 28, 30.

Selon un mode de réalisation, le bouchon temporaire 42 est réalisé en élastomère de silicone.

Selon la première variante, après la mise en place des bouchons temporaires 42, les profilés en U et en C 28, 30 sont juxtaposés tout autour du moule 34 de sorte que les branches de deux profilés adjacents soient accolées l'une contre l'autre pour former un raidisseur 24 positionné dans l'une des rainures 36 du moule 34 et que les faces internes des parties centrales 38 soient plaquées contre le moule 34.

Selon la deuxième variante, les profilés en U et en C 28, 30 sont juxtaposés tout autour du moule 34 de sorte que les branches de deux profilés adjacents soient accolées l'une contre l'autre pour former un raidisseur 24 et que les faces internes des parties centrales 38 soient plaquées contre le moule 34. En suivant, les bouchons temporaires 42 sont mis en place dans chacun des trous traversants 26.

Après la mise en place des profilés en U et en C 28, 30 sur le moule 34, la peau externe 32 est déposée sur les faces externes des parties centrales 38. Selon un mode opératoire, la peau externe 32 est obtenue par un enroulement de renforts fibreux autour du moule 34 (qui pivote autour de l'axe de pivotement A34), à l'aide d'au moins une tête de dépose de fibres ou de mèches de fibres.

Après la mise en place de la peau externe 32, des systèmes de drainage et une enveloppe étanche également appelée vessie sont mises en place sur la peau externe 32, l'enveloppe étanche étant reliée de manière étanche au moule 34 de part et d'autre de la peau externe 32.

Avantageusement, le moule 34 est étanche, a une longueur supérieure à celle du caisson central de voilure 14 et s'étend de part et d'autre de ce dernier de manière à offrir de part et d'autre une surface de contact à la vessie.

Selon une première variante, la peau externe 32 est réalisée à partir d'éléments fibreux pré-imprégnés.

Selon une deuxième variante, la peau externe 32 est réalisée à partir d'éléments fibreux secs. Dans ce cas, on injecte ou on infuse une résine dans l'enceinte délimitée par le moule 34 étanche et la vessie.

L'ensemble formé par le moule 34, les profilés en U et en C 28, 30, la peau externe 32, les systèmes de drainage et la vessie est introduit dans un autoclave sous 7 bars et soumis à un cycle de polymérisation pour assurer la consolidation du caisson central de voilure 14 par polymérisation de la peau externe 32. Selon une variante, la cohésion entre la peau externe 32 et les parties centrales 38 des profilés en C et en U 28, 30 peut être obtenue par co-cuisson ou par tout autre moyen.

Les étapes de mise en place des profilés en C et en U 28, 30 sur le moule 34, des renforts fibreux pour former la peau externe 32 sur les parties centrales 38 des longerons en C et en U 28, 30, des systèmes de drainage, de l'enveloppe étanche ne sont pas plus décrites car elles sont connues de l'homme du métier.

Après sa polymérisation, le caisson central de voilure 14 est démoulé et chaque bouchon temporaire 42 est retiré, comme illustré sur la figure 7, de manière à dégager les trous traversants 26. Le retrait des bouchons temporaires 42 est réalisé manuellement ou à l'aide d'un outil comme un chasse-goupille par exemple.

Le procédé de réalisation de l'invention permet de supprimer les étapes de réalisation des trous traversants après la polymérisation, à l'intérieur du caisson central de voilure. Par ailleurs, le fait de réaliser les premiers et deuxièmes tronçons 26.1, 26.2 des trous traversants 26 avant l'étape de polymérisation permet de supprimer l'étape de peinture des trous traversants.

Enfin, le fait que les premiers et deuxièmes tronçons 26.1, 26.2 des trous traversants 26 soient réalisés indépendamment les uns des autres alors que les profilés en U ou en C 28, 30 ne sont pas encore assemblés permet de simplifier l'étape de perçage.

## Revendications

1. Procédé de fabrication d'un caisson central de voilure d'un aéronef comprenant des raidisseurs (24), au moins un desdits raidisseurs (24) présentant au moins un trou traversant (26), ledit caisson central de voilure étant réalisé à partir d'une pluralité de profilés en U et en C (28, 28', 30, 30') et d'une peau externe (32), les profilés en U ou en C (28, 28', 30, 30') présentant chacun une partie centrale (38) et deux branches (40.1, 40.2) de part et d'autre de la partie centrale (38), le procédé de fabrication comprenant les étapes suivantes :
- de dépose des profilés en U et en C (28, 28', 30, 30') juxtaposés tout autour d'un moule (34) de sorte que des première et deuxième branches (40.1, 40.2) de deux profilés en U ou en C (28, 28', 30, 30') adjacents soient accolées l'une contre l'autre pour former un raidisseur (40);
- de dépose de la peau externe (32) sur les parties centrales (38) des profilés en U et en C(28, 28', 30, 30');
- de polymérisation; et
- de démoulage;
procédé de fabrication dans lequel pour chaque raidisseur (24) présentant au moins un trou traversant (26) et comprenant une première branche (40.1) d'un premier profilé en U et en C (28, 30) et une deuxième branche (40.2) d'un deuxième profilé en U et en C (28', 30'), le procédé comprend, pour chaque trou traversant (26), les étapes de réalisation d'un premier tronçon (26.1) du trou traversant (26) dans le premier profilé en U ou en C (28, 30) et de réalisation d'un deuxième tronçon (26.2) du trou traversant (26) dans le deuxième profilé en U ou en C (28', 30') avant que les premier et deuxième profilés en U ou en C (28, 28', 30, 30') ne soient positionnés sur le moule (34).

2. Procédé de fabrication d'un caisson central de voilure selon la revendication 1, **caractérisé en ce que** les premier et deuxième tronçons (26.1, 26.2) de chaque trou traversant (26) sont réalisés avant que les profilés en U ou en C (28, 28', 30, 30') ne soient totalement polymérisés.

3. Procédé de fabrication d'un caisson central de voilure selon l'une des revendications précédentes, **caractérisé en ce que** chaque premier ou deuxième tronçon (26.1, 26.2) de chaque trou traversant (26) est comblé à l'aide d'un bouchon temporaire (42) avant que les profilés en U ou en C (28, 28', 30, 30') ne soient positionnés sur le moule (34), chaque bouchon temporaire (42) étant retiré après l'étape de polymérisation du caisson central de voilure.

4. Procédé de fabrication d'un caisson central de voilure selon la revendication précédente, **caractérisé en ce que** chaque bouchon temporaire (42) présente une hauteur (H) sensiblement égale à une épaisseur (E) de la première ou deuxième branche (40.1, 40.2) dans laquelle est prévu le premier ou deuxième tronçon (26.1, 26.2) comblé par le bouchon temporaire (42).

5. Procédé de fabrication d'un caisson central de voilure selon l'une des revendications 1 à 2, **caractérisé en ce que** les premier et deuxième tronçons (26.1, 26.2) de chaque trou traversant (26) sont comblés à l'aide d'un bouchon temporaire (42), après que les profilés en U ou en C (28, 30) soient accolés pour former les raidisseurs (24), chaque bouchon temporaire (42) étant retiré après l'étape de polymérisation du caisson central de voilure.

6. Procédé de fabrication d'un caisson central de voilure selon la revendication précédente, **caractérisé en ce que** chaque bouchon temporaire (42) présente une hauteur (H) sensiblement égale à la longueur du trou traversant (26) qu'il comble.

7. Procédé de fabrication d'un caisson central de voilure selon l'une des revendications 3 à 6, **caractérisé en ce que** chaque bouchon temporaire (42) a un diamètre égal ou très légèrement inférieur à celui des premier et/ou deuxième tronçons (26.1, 26.2) qu'il comble avant l'étape de polymérisation.

8. Procédé de fabrication d'un caisson central de voilure selon l'une des revendications 3 à 6, **caractérisé en ce que** chaque bouchon temporaire (42) présente un diamètre égal ou très légèrement supérieur à celui des premier et/ou deuxième tronçons (26.1, 26.2) qu'il comble et **en ce que** chaque bouchon temporaire (42) est réalisé en un matériau légèrement compressible de manière à pouvoir être inséré dans les premier et/ou deuxième tronçons (26.1, 26.2) à l'état légèrement comprimé.

9. Procédé de fabrication d'un caisson central de voilure selon la revendication précédente, **caractérisé en ce que** chaque bouchon temporaire (42) est réalisé en élastomère de silicone.

10. Procédé de fabrication d'un caisson central de voilure selon l'une des revendications 3 à 9, **caractérisé en ce que** chaque bouchon temporaire (42) a une forme cylindrique.

## Patentansprüche

1. Verfahren zur Herstellung eines mittleren Flügelkastens eines Luftfahrzeugs mit Versteifungen (24), wobei wenigstens eine der Versteifungen (24) wenigstens ein Durchgangsloch (26) aufweist, wobei der zentrale Flügelkasten aus einer Vielzahl von U- und C-Profilen (28, 28', 30, 30') und einer Außenhaut (32) hergestellt wird, wobei die U- oder C-Profile (28, 28', 30, 30') jeweils einen mittleren Abschnitt (38) und zwei Schenkel (40.1, 40.2) auf beiden Seiten des mittleren Abschnitts (38) aufweisen und wobei das Herstellungsverfahren die folgenden Schritte umfasst:
- Ablegen der nebeneinander liegenden U- und C-Profile (28, 28', 30, 30') um eine Form (34) herum, so dass ein erster und ein zweiter Schenkel (40.1, 40.2) von zwei benachbarten U- oder C-Profilen (28, 28', 30, 30') aneinandergelegt werden, um eine Versteifung (40) zu bilden;
- Auflegen der Außenhaut (32) auf die mittleren Abschnitte (38) der U- und C-Profile (28, 28', 30, 30');
- Polymerisation; und
- Entformen aus der Form;
Herstellungsverfahren, bei dem für jede Versteifung (24), die wenigstens ein Durchgangsloch (26) umfasst und einen ersten Schenkel (40.1) eines ersten U- und C-Profils (28, 30) und einen zweiten Schenkel (40.2) eines zweiten U- und C-Profils (28', 30') aufweist, das Verfahren für jedes Durchgangsloch (26) die Schritte der Herstellung eines ersten Abschnitts (26.1) des Durchgangslochs (26) in das erste U- oder C-Profil (28, 30) und das Herstellen eines zweiten Abschnitts (26.2) des Durchgangslochs (26) in das zweite U- oder C-Profil (28', 30') aufweist, bevor das erste und das zweite U- oder C-Profil (28, 28', 30, 30') auf der Form (34) angeordnet werden.

2. Verfahren zur Herstellung eines mittleren Flügelkastens nach Anspruch 1, **dadurch gekennzeichnet, dass** der erste und der zweite Abschnitt (26.1, 26.2) jedes Durchgangslochs (26) hergestellt werden, bevor die U- oder C-Profile (28, 28', 30, 30') vollständig polymerisiert sind.

3. Verfahren zur Herstellung eines mittleren Flügelkastens nach einem der vorhergehenden Ansprüche, **dadurch gekennzeichnet, dass** jeder erste oder zweite Abschnitt (26.1, 26.2) jedes Durchgangslochs (26) mit einem temporären Stopfen (42) gefüllt wird, bevor die U- oder C-Profile (28, 28', 30, 30') auf der Form (34) angeordnet werden, wobei jeder temporäre Stopfen (42) nach dem Schritt der Polymerisation des mittleren Flügelkastens entfernt wird.

4. Verfahren zur Herstellung eines mittleren Flügelkastens nach dem vorhergehenden Anspruch, **dadurch gekennzeichnet, dass** jeder temporäre Stopfen (42) eine Höhe (H) aufweist, die im Wesentlichen gleich einer Dicke (E) des ersten oder zweiten Schenkels (40.1, 40.2) ist, in dem der erste oder zweite Abschnitt (26.1, 26.2) vorgesehen ist, der durch den temporären Stopfen (42) ausgefüllt wird.

5. Verfahren zur Herstellung eines mittleren Flügelkastens nach einem der Ansprüche 1 bis 2, **dadurch gekennzeichnet, dass** der erste und zweite Abschnitt (26.1, 26.2) jedes Durchgangslochs (26) mit einem temporären Stopfen (42) aufgefüllt werden, nachdem die U- oder C-Profile (28, 30) aneinandergefügt wurden, um die Versteifungen (24) zu bilden, wobei jeder temporäre Stopfen (42) nach dem Schritt der Polymerisation des mittleren Flügelkastens entfernt wird.

6. Verfahren zur Herstellung eines mittleren Flügelkastens nach dem vorhergehenden Anspruch, **dadurch gekennzeichnet, dass** jeder temporäre Stopfen (42) eine Höhe (H) aufweist, die im Wesentlichen gleich der Länge des Durchgangslochs (26) ist, das er ausfüllt.

7. Verfahren zur Herstellung eines mittleren Flügelkastens nach einem der Ansprüche 3 bis 6, **dadurch gekennzeichnet, dass** jeder temporäre Stopfen (42) einen Durchmesser hat, der gleich oder sehr geringfügig kleiner ist als der des ersten und/oder zweiten Abschnitts (26.1, 26.2), den er vor dem Schritt der Polymerisation ausfüllt.

8. Verfahren zur Herstellung eines mittleren Flügelkastens nach einem der Ansprüche 3 bis 6, **dadurch gekennzeichnet, dass** jeder temporäre Stopfen (42) einen Durchmesser aufweist, der gleich oder sehr geringfügig größer ist als der des ersten und/oder zweiten Abschnitts (26.1, 26.2), den er ausfüllt, und dass jeder temporäre Stopfen (42) aus einem leicht komprimierbaren Material hergestellt ist, so dass er im leicht komprimierten Zustand in den ersten und/oder zweiten Abschnitt (26.1, 26.2) eingeführt werden kann.

9. Verfahren zur Herstellung eines mittleren Flügelkastens nach dem vorhergehenden Anspruch, **dadurch gekennzeichnet, dass** jeder temporäre Stopfen (42) aus einem Silikonelastomer hergestellt wird.

10. Verfahren zur Herstellung eines mittleren Flügelkastens nach einem der Ansprüche 3 bis 9, **dadurch gekennzeichnet, dass** jeder temporäre Stopfen (42) eine zylindrische Form hat.

## Claims

1. Method for manufacturing a centre wing box of an aircraft comprising stiffeners (24), at least one of said stiffeners (24) having at least one through-hole (26), said centre wing box being produced from a plurality of U-shaped and C-shaped profiles (28, 28', 30, 30') and from an external skin (32), the U-shaped or C-shaped profiles (28, 28', 30, 30') each having a central part (38) and two legs (40.1, 40.2) on either side of the central part (38), the manufacturing method comprising the following steps of:
- laying the U-shaped and C-shaped profiles (28, 28', 30, 30') juxtaposed entirely around a mould (34) such that first and second legs (40.1, 40.2) of two adjacent U-shaped or C-shaped profiles (28, 28', 30, 30') are placed side by side against one another in order to form a stiffener (40),
- laying the external skin (32) on the central parts (38) of the U-shaped and C-shaped profiles (28, 28', 30, 30'),
- polymerization, and
- removal from the mould,
in which manufacturing method, for each stiffener (24) having at least one through-hole (26) and comprising a first leg (40.1) of a first U-shaped and C-shaped profile (28, 30) and a second leg (40.2) of a second U-shaped and C-shaped profile (28', 30'), the method comprises, for each through-hole (26), the steps of producing a first section (26.1) of the through-hole (26) in the first U-shaped or C-shaped profile (28, 30) and of producing a second section (26.2) of the through-hole (26) in the second U-shaped or C-shaped profile (28', 30') before the first and second U-shaped or C-shaped profiles (28, 28', 30, 30') are positioned on the mould (34).

2. Method for manufacturing a centre wing box according to Claim 1, **characterized in that** the first and second sections (26.1, 26.2) of each through-hole (26) are produced before the U-shaped or C-shaped profiles (28, 28', 30, 30') are totally polymerized.

3. Method for manufacturing a centre wing box according to either of the preceding claims, **characterized in that** each first or second section (26.1, 26.2) of each through-hole (26) is filled in using a temporary plug (42) before the U-shaped or C-shaped profiles (28, 28', 30, 30') are positioned on the mould (34), each temporary plug (42) being removed after the step for polymerizing the centre wing box.

4. Method for manufacturing a centre wing box according to the preceding claim, **characterized in that** each temporary plug (42) has a height (H) substantially equal to a thickness (T) of the first or second leg (40.1, 40.2) in which the first or second section (26.1, 26.2) filled in by the temporary plug (42) is provided.

5. Method for manufacturing a centre wing box according to either of Claims 1 and 2, **characterized in that** the first and second sections (26.1, 26.2) of each through-hole (26) are filled in using a temporary plug (42), after the U-shaped or C-shaped profiles (28, 30) are placed side by side in order to form the stiffeners (24), each temporary plug (42) being removed after the step for polymerizing the centre wing box.

6. Method for manufacturing a centre wing box according to the preceding claim, **characterized in that** each temporary plug (42) has a height (H) substantially equal to the length of the through-hole (26) filled in thereby.

7. Method for manufacturing a centre wing box according to one of Claims 3 to 6, **characterized in that** each temporary plug (42) has a diameter equal to or very slightly less than that of the first and/or second sections (26.1, 26.2) filled in thereby before the polymerization step.

8. Method for manufacturing a centre wing box according to one of Claims 3 to 6, **characterized in that** each temporary plug (42) has a diameter equal to or very slightly greater than that of the first and/or second sections (26.1, 26.2) filled in thereby and **in that** each temporary plug (42) is produced from a slightly compressible material such as to be insertable into the first and/or second sections (26.1, 26.2) in the slightly compressed state.

9. Method for manufacturing a centre wing box according to the preceding claim, **characterized in that** each temporary plug (42) is produced from silicone elastomer.

10. Method for manufacturing a centre wing box according to one of Claims 3 to 9, **characterized in that** each temporary plug (42) has a cylindrical shape.
